# EUROPEAN PATENT SPECIFICATION

(11) **EP 0 972 701 B1**
(45) Date of publication and mention of the grant of the patent: **08.10.2003**
(21) Application number: 99202310.1
(22) Date of filing: 14.07.1999
(51) Int. Cl.: B62D 47/02

(54) **Bus with a low floor construction**
Autobus mit abgesenkter Bodenkonstruktion
Bus avec construction de plancher surbaissé

(30) Priority: 17.07.1998 NL 1009677
(43) Date of publication of application: 19.01.2000
(73) Proprietor: Advanced Public Transport Systems BV, 5555 XL Valkenswaard (NL)
(72) Inventor: Deelen, Cornelis Josephus Adrianus, 5712 JR Someren (NL)
(74) Representative: Verhees, Godefridus Josephus Maria

(56) References cited:
- DE-A- 4 110 162

## Description

### BACKGROUND OF THE INVENTION:

### Field of the invention

The invention relates to a bus with a low floor construction, comprising steerable front wheels that are near the front of the bus in wheel housings and are fastened to the bodywork of the bus by means of a front wheel suspension, which bus also comprises a driver's seat that is in the front of the bus, an entry door that is at least virtually directly behind one of the front wheels, and a low entry space just beside the entry door, which low entry space continues to beside the driver's seat. A low floor construction should be understood to mean a floor that is lower than the floor of most currently generally used buses for public personnel transport. A low entry space is understood to mean an entry space that is directly or virtually directly on the low floor construction.

### Prior art

Such a bus is known from the German patent application DE-A 41 10 162. Many developments are in progress at various public transport enterprises to stimulate the use of public transport by making its use more attractive. This takes place in such ways as by improving entering and leaving a bus including by the application of low floors. Good communication between chauffeur and passengers is also an important aspect. In the known bus this is only possible via a narrow gangway between the driver's seat and a passenger seat along the opposite side. Passengers entering the bus can only reach the chauffeur via this narrow gangway in order to pay or to ask questions, for example about which stop they should best leave the bus at or with regard to changing buses. To reach the chauffeur from the entry door, the entering passengers must proceed at a right angle curve. This is bothersome, particularly for partly disabled or disabled passengers. In addition, the passengers, after they have paid, must return by the same narrow gangway. If several passengers are entering the bus who are in a row in the gangway this is bothersome or impossible. The waiting passengers must move to the side, leave the gangway or keep it accessible.

### Summary of the invention

An objective of the invention is to provide a bus of the type described in the preamble in which a better accessibility of the chauffeur exists as well as a better communication being possible between the chauffeur and passenger. In this context the bus according to the invention is characterised by the fact that the low entry space extends in the width of the bus at the front from the wheel housing on the side of the entry door to near the front of the driver's seat , so that along a flowing or straight line from the entry door to beside the driver's seat the entry space is free of obstacles, so that a passenger can move in a flowing line from the entry door to beside the driver's seat and then to a sitting or standing place in the bus without obstructing other passengers while doing this. A flowing line is understood to mean a line without a kink, such as a sharp curve, in it. Thus a passenger can reach the point beside the driver's seat without problems, yielding a good accessibility of the chauffeur and good communication between chauffeur and passengers. After for example paying, the passenger can then walk away to the left without hindering any passengers who may be waiting behind him. This would also permit disabled or wheelchair passengers to easily reach the chauffeur as well.

The bus according to the invention creates maximal space for entering passengers to reach the chauffeur. This also permits a good flow of passengers. Passengers with a public transportation subscription, etc., can go directly through the entry door along the people waiting in front of the counter. This shortens the necessary stopping time at a stop and is friendlier to the customers because no unnecessary congestion occurs. Disabled persons are no obstacles for others because there is sufficient space to pass. In addition, the routing to the counter and then to the sitting or standing places can be so organised that waiting passengers need not make way for passengers returning from the counter.

Creating the above described large low entry space can be facilitated by a large number of different construction measures. Here care must be taken that the elements of the front wheel suspension must be located under and/or beside the low floor construction and/or low entry space.

A favourable embodiment of this is characterised by the fact that the front wheel suspension comprises at least two supporting arms, with one end of each arm being connected to the bodywork or to a sub-frame and with the other end being connected to a yoke to which a front wheel is coupled, which supporting arms are above each other, with the lower supporting arm being under the low entry space and the upper supporting arm beside it, or viewed in the driving direction in front of the low entry space.

Another embodiment of this is characterised by the fact that in terms of the driving direction of the bus, the back part of the upper supporting arm from the connection point with the yoke is at least virtually at right angles to the longitudinal axis of the bus. By using an asymmetrical upper supporting arm, the low floor can continue further to the front of the vehicle.

Yet a further embodiment of this is characterised by the fact that, viewed in the driving direction of the bus, the upper supporting arm of the front wheel suspension is virtually completely in front of the wheel axle.

### Brief description of the drawings

The invention will be elucidated more fully below on the basis of drawings in which embodiments of the bus according to the invention are shown. In these drawings:
Figure 1 is a schematic diagram of an exploded top view of a first embodiment of the bus according to the invention;
Figure 2 is a schematic diagram of a side view of the bus shown in Figure 1;
Figure 3 is an exploded top view of a second embodiment of the bus according to the invention;
Figure 4 is a side view of the bus shown in Figure 3; and
Figure 5 is a cross section of the bus shown in Figure 3, specifically at the location of the front wheel suspension.

### Detailed description of the drawings

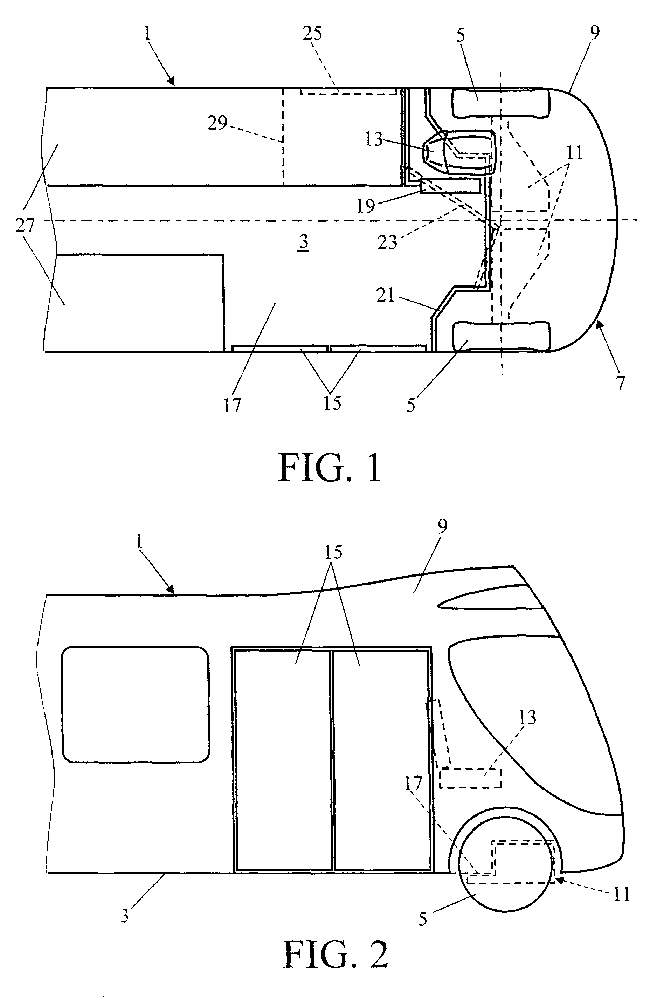

Figure 1 shows an exploded top view of a first embodiment of the bus according to the invention. The bus 1 has a low floor 3 to facilitate passengers' stepping in and out. The bus has steerable front wheels 5, that are fastened near the front 7 of the bus to the bodywork 9 by means of a front wheel suspension 11 that is shown diagrammatically with a broken line. A driver's seat 13 is in the front of the bus and is located partly above the front wheel suspension 11. In the front part of the bus 1 there is an entry door 15 just behind one of the front wheels 5, with a low entry space 17 beside it.

To facilitate good stepping in and out of the bus as well as good accessibility of and communication with the chauffeur, the low entry space 17 extends from the rear of the entry door 15 to near the front of the driver's seat 13. The portion of the entry space 17 beside the driver's seat 13 is separated by means of a counter 19 from the driver's seat and continues to the wheel housing 21 on the side of the entry door 15.

It is also possible to allow the limit of the low entry space 17 at the front to continue to the limit shown with broken lines 23. The counter is then at an angle in relation to the driver's seat 13.

If desired by a transport company, on the side across from the entry door 15 of the bus 1 another entry door 25 (shown with broken lines) can be present. The row of seats 27 on the chauffeur's side should then be shortened according to the broken line 29.

Figure 2 shows a side view of the bus 1. Here one can clearly see that the bus has a low floor 3 and the driver's seat 13 is above the wheel suspension 11. The front wheel suspension 11 is also shown diagrammatically here with a broken line and is located partly under, beside and in front of the low entry space 17.

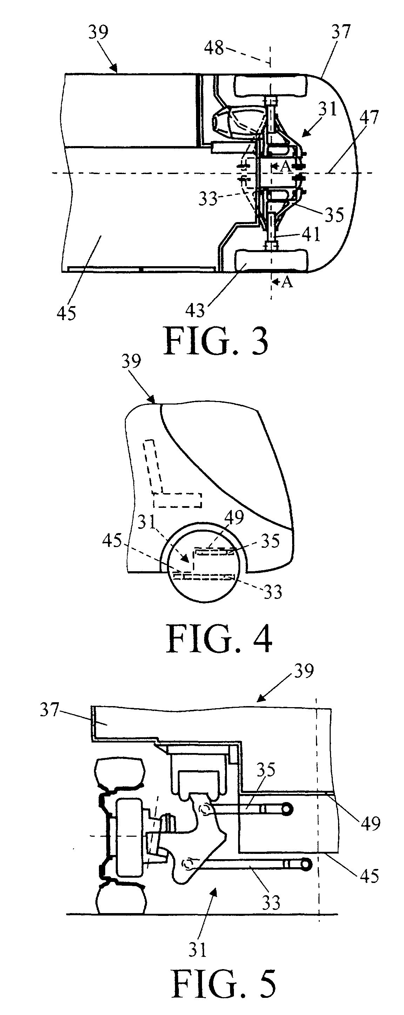

On the basis of Figures 3 through 7, hereinafter a front wheel suspension is described in which a large low entry space is made possible by placing the elements of the front wheel suspension under and/or beside the low entry space.

Figure 3 shows a second embodiment of the bus according to the invention. The front wheel suspension 31 has two supporting arms, a lower supporting arm 33 and a upper supporting arm 35. Each supporting arm is connected with an end in a hinged manner to the bodywork 37 of the bus 39 (for the sake of clarity this connection is not shown). The other ends of the supporting arms 33, 35 are connected to a yoke 41 to which a front wheel 43 is coupled. The lower supporting arm 33 is fastened under the low entry space 45 to the bodywork, thus placing no limitations on the dimensions of the low entry space 45. The upper supporting arm 35 is located at a higher level than the entry space 45, thus limiting the dimensions of the low entry space. To be able to allow the low entry space 45 to go as far as possible toward the front, the back part of the upper supporting arm 35, seen in the driving direction of the bus, from the connection point with the yoke 41 is at least virtually at right angles to the longitudinal axis 47 of the bus 39. The upper supporting arm 35 is located almost entirely in front of the wheel axle 48. By adjusting the shape of the yoke 41 it can even be achieved that the upper supporting arm comes to be located entirely in front of the wheel axle 48.

Figure 4 shows a side view of the bus 1 shown in Figure 3. Here one can clearly see that the lower supporting arm 33 of the wheel suspension 31 is at a level that is lower than the floor of the entry space 45. The upper supporting arm 35 is located clearly at a higher level. The entry space 45 continues to the back part of the upper supporting arm 35 at a low level. Further forward the floor 49 is at a higher level, above the upper supporting arm 35. In this portion of the vehicle there can be a few steps that make it easy for the chauffeur to reach the seat 51.

Figure 5 shows a cross section according to A-A in Figure 3. Here, too, for the sake of clarity the fastening construction of the supporting arms 33 and 35 to the bodywork 37 is not shown. The low entry space 45 continues to the upper supporting arm 35, so the floor 49 is at a higher level.

Although in the above the invention is explained on the basis of the drawings, it should be noted that the invention is in no way limited to the embodiments shown in the drawings. The invention also extends to all embodiments deviating from the embodiments shown in the drawings within the context defined by the claims. The front wheel suspension can be fastened to the bodywork directly or via a sub-frame. Another type of wheel suspension can be used such as a McPherson construction, with a strut unit beside the low entry space and a supporting arm under the entry space, or rigid axle construction that runs through under the low entry space, with reaction arms being present under and beside the entry space.

## Claims

1. Bus with a low floor construction, comprising steerable front wheels (5) that are near the front (7) of the bus in wheel housings (21) and are fastened to the bodywork (9) of the bus by means of a front wheel suspension (11), which bus also comprises a driver's seat (13) that is in the front of the bus, an entry door (15) that is at least virtually directly behind one of the front wheels (5), and a low entry space (17) just beside the entry door (15), which low entry space (17) extends to beside the driver's seat, **characterised in that** the low entry space (17) extends in the width of the bus at the front from the wheel housing (21) on the side of the entry door (15) to near the front of the driver's seat (13), so that along a flowing or straight line from the entry door to beside the driver's seat the entry space is free of obstacles, so that a passenger can move in a flowing line from the entry door to beside the driver's seat and then to a sitting or standing place in the bus without obstructing other passengers while doing this.

2. Bus according to claim 1, **characterised in that** the front wheel suspension comprises at least two supporting arms, with one end of each arm being connected to the bodywork or to a sub-frame and with the other end being connected to a yoke to which a front wheel is coupled, which supporting arms are above each other, with the lower supporting arm being under the low entry space and the upper supporting arm beside it, or viewed in the driving direction in front of the low entry space.

3. Bus according to claim 2, **characterised in that**, viewed in the driving direction of the bus, the back part of the upper supporting arm from the connection point with the yoke is at least virtually at right angles to the longitudinal axis of the bus.

4. Bus according to claim 2 or 3, **characterised in that**, viewed in the driving direction of the bus, the upper supporting arm of the front wheel suspension is virtually completely in front of the wheel axle.

## Patentansprüche

1. Omnibus mit einer Niederflurkonstruktion, der über lenkbare Vorderräder (5) verfügt, die sich in der Nähe der Frontseite (7) des Omnibusses in Radkästen (21) befinden und mit Hilfe einer Vorderradaufhängung (11) an einer Karosserie (9) des Omnibusses angebracht sind, der darüber hinaus einen Fahrersitz (13) umfasst, der sich vorne in dem Omnibus befindet, sowie eine Einstiegstür (15), die sich direkt oder fast direkt hinter einem der Vorderräder (5) befindet, und eine niedrige Einstiegsfläche (17), die sich unmittelbar neben der Einstiegstür (15) befindet und bis an den Fahrersitz reicht, **dadurch gekennzeichnet, dass** die niedrige Einstiegsfläche (17) quer zur Fahrzeuglängsachse an der Vorderseite von dem Radkasten (21) auf der Seite der Einstiegstür (15) bis nahe an die Vorderseite des Fahrersitzes (13) reicht, so dass die Einstiegsfläche entlang einer fließenden oder geraden Linie, die von der Einstiegstür bis zur Seite des Fahrersitzes reicht, frei von Hindernissen ist und sich ein Fahrgast in einer fließenden Linie von der Einstiegstür bis zur Seite des Fahrersitzes und danach zu einem Sitz- oder Stehplatz in dem Omnibus bewegen kann, ohne dass er dabei die anderen Fahrgäste behindert.

2. Omnibus nach Anspruch 1, **dadurch gekennzeichnet, dass** die Vorderradaufhängung mindestens zwei Lenker umfasst, die jeweils auf einer Seite mit der Karosserie oder mit einem Hilfsrahmen und auf der anderen Seite mit einem Tragrahmen verbunden sind, an dem ein Vorderrad angebracht ist, wobei die Lenker übereinander angeordnet sind und sich der untere Lenker unter der niedrigen Einstiegsfläche befindet, während sich der obere Lenker neben oder, in Fahrtrichtung gesehen, vor der niedrigen Einstiegsfläche befindet.

3. Omnibus nach Anspruch 2, **dadurch gekennzeichnet, dass** der hintere Teil des oberen Lenkers, in Fahrtrichtung des Omnibusses gesehen, bis zu der Verbindung mit dem Tragrahmen genau oder nahezu im rechten Winkel zu der Längsachse des Omnibusses angeordnet ist.

4. Omnibus nach den Ansprüchen 2 oder 3, **dadurch gekennzeichnet, dass** sich der obere Lenker der Vorderradaufhängung, in Fahrtrichtung des Omnibusses gesehen, vollständig oder fast vollständig vor der Radachse befindet.

## Revendications

1. Bus à structure de plancher abaissée, comportant des roues avants directrices (5) montées à proximité de l'avant (7) du bus dans des logements de roues (21) et fixées au châssis (9) du bus au moyen d'une suspension avant (11), ledit bus comportant également un siège de conduite (13) disposé à l'avant du bus, une porte d'entrée (15) située au moins virtuellement directement derrière l'une des roues avants (5), et une zone d'accès abaissée (17) juste à coté de la porte d'entrée (15), ladite zone d'accès abaissée (17) s'étendant jusqu'à proximité du siège de conduite, **caractérisé en ce que** la zone d'accès abaissée (17) s'étend à l'avant suivant la largueur du bus, à partir du logement de roue (21) sur le coté de la porte d'entrée (15) jusqu'à proximité de l'avant du siège de conduite (13), de telle sorte que selon une ligne droite ou fluctuante à partir de la porte d'entrée jusqu'au siège de conduite, l'espace d'accès soit libre de tout obstacle, de telle sorte d'un passager puisse se déplacer selon une ligne fluctuante entre la porte d'entrée et le siège de conduite et ensuite vers une place assise ou debout à l'intérieur du bus sans obstruer le passage pour les autres passagers.

2. Bus selon la revendication 1, **caractérisé en ce que** la suspension de roues avant (31,61) comporte au moins deux bras de support (33, 35, 67, 69, 71), l'une des extrémités de chacun des bras étant reliée au châssis (37) ou à un sous-châssis et l'autre extrémité étant reliée à un accouplement (41) auquel est reliée une roue avant, lesdits bras de support étant l'un au dessus de l'autre, le bras de support inférieur (33, 71) étant sous la zone d'accès abaissée (45, 65) et le bras de support supérieur (37, 67, 69) à coté, ou vu dans la direction de conduite à l'avant de la zone d'accès abaissée (45, 65).

3. Bus selon la revendication 2, **caractérisé en ce que**, vu dans 1a direction de conduite du bus, la partie arrière du bras de support supérieur (35 ) à partir du point de liaison avec l'accouplement (41 ) est moins virtuellement à angle droit avec l'axe longitudinal (47) du bus.

4. Bus selon les revendications 2 ou 3, **caractérisé en ce que** vu selon la direction de déplacement du bus, le bras de support supérieur (35) de la suspension de roues avant (31) est virtuellement totalement en avant de l'axe des roués.
